# EUROPÄISCHE PATENTANMELDUNG

(11) **EP 1 174 402 A1**
(43) Veröffentlichungstag der Anmeldung: **23.01.2002**
(21) Anmeldenummer: 00114335.3
(22) Anmeldetag: 04.07.2000
(51) Int. Cl.: C05C 5/04, C05G 5/00

(54) **Verfahren zur Herstellung eines Düngemittels**

(71) Anmelder: Agra Dünger GmbH, 66333 Völklingen (DE)
(72) Erfinder:
(74) Vertreter: Wunderlich, Rainer, Dipl.-Ing.

(57) **Zusammenfassung**

Die vorliegende Erfindung betrifft ein Verfahren zur Herstellung eines Düngemittels mit mineralischen Salzen, bei dem die mineralischen Salze vermischt und zu Granulat verarbeitet werden. Ein besonders wirtschaftliches Verfahren wird dadurch erreicht, dass die mineralischen Salze und kristallines Tetrahydrat Calciumnitrat unterhalb seiner Schmelztemperatur beigemengt und damit vermischt wird. Diese Mischung wird auf eine Temperatur oberhalb der Schmelztemperatur des Tetrahydrat Calciumnitrates erwärmt, so dass Kristallwasser freigesetzt wird. Bei dieser Temperatur wird die Mischung mit dem Kristallwasser zu einer plastischen Masse verarbeitet, welche zu Granulat geformt und unterhalb der Schmelztemperatur abgekühlt wird.

## Beschreibung

Die Erfindung betrifft ein Verfahren zur Herstellung eines Düngemittels mit mineralischen Salzen, bei dem die mineralischen Salze vermischt und zu Granulat verarbeitet werden.

Die Herstellung von mineralischen Düngemitteln als Granulat ist im Stand der Technik hinlänglich bekannt. Gegenüber flüssigem oder feinpulvrigen Düngemitteln haben Düngemittelgranulate Vorteile hinsichtlich Transport, Lagerung und Handhabung. Granulate sind daher eine der gebräuchlichsten Anwendungsformen von Düngemitteln.

An die Herstellung von Düngemittelgranulaten werden verschiedene Anforderungen gestellt. Zum einen soll das Granulat möglichst formgenau herstellbar sein. Eine möglichst gleiche Größe stellt definierte, gleichmäßige Zerfallseigenschaften sicher, was für eine gezielte Nährstoffzuführung notwendig ist. Da zudem Überkorn die maschinelle Ausbringung des Düngemittels beeinträchtigen kann, muss dieses nach der Granulatherstellung vom Gutkorn getrennt und gegebenenfalls dem Produktionsprozess rückgeführt werden. Weiterhin wird eine gute Bindung innerhalb des Granulatkornes verlangt, um auch nach längerer Lagerung Staubverluste beim Ausbringen des Düngemittels zu vermeiden. Schließlich soll das Granulat leicht und damit wirtschaftlich herstellbar sein.

Im Stand der Technik ist es bekannt, bei der Granulatherstellung den mineralischen Salzen ein Bindemittel beizumengen. Diese Bindemittel haben aber in der Regel keine Nutzwirkung zur Nährstoffeinbringung und können unter Umweltgesichtspunkten eine Belastung darstellen. Die Verwendung von Bindemitteln ist daher aus ökonomischen und ökologischen Gründen nachteilig.

Weiterhin ist es bekannt, die Mischung aus mineralischen Salzen zur Bildung des Granulates mit Wasser zu benezten und mittels Agglomerieren ein Granulat herzustellen. Eine gleichmäßige Benetzung der mineralischen Salze mit Wasser durch Zugabe ist technisch schwer zu realisieren. Zudem muss bei den bekannten Verfahren im Anschluss an die Granulatbildung ein Trocknungsvorgang durchgeführt werden, um überschüssiges Wasser zu entfernen. Dies ist nicht nur hinsichtlich des Energieverbrauchs nachteilig. Die Temperatureinwirkung bei einer thermischen Trocknung kann auch zu unerwünschten chemischen Veränderungen der mineralischen Salze führen. Insbesondere ist es bekannt, dass bei einer Trocknung mit Temperaturen von deutlich über 100°C sogenanntes Eisen II zu Eisen III oxidiert sowie bei Verwendung von Methylenharnstoff dieses zersetzt wird.

Der Erfindung liegt die **Aufgabe** zugrunde, ein Verfahren zur Herstellung eines Düngemittels mit mineralischen Salzen anzugeben, mit welchen das Düngemittelgranulat wirtschaftlich und zugleich formgenau und mit hohem Nährstoffgehalt erzeugbar ist.

Die Aufgabe wird erfindungsgemäß durch ein Verfahren nach dem Patentanspruch 1 gelöst. Bevorzugte Ausführungsformen der Erfindung sind in den abhängigen Ansprüchen angegeben.

Ausgehend von dem gattungsgemäßen Verfahren ist die Erfindung dadurch gekennzeichnet, dass den mineralischen Salzen kristallines Tetrahydrat-Calciumnitrat unterhalb seiner Schmelztemperatur beigemengt und zu einer Mischung vermengt wird, dass die Mischung aus den mineralischen Salzen und dem Tetrahydrat-Calciumnitrat auf eine Temperatur oberhalb der Schmelztemperatur des Tetrahydrat-Calciumnitrates erwärmt und dabei Kristallwasser freigesetzt wird, dass bei dieser Temperatur die Mischung mit dem freigesetzten Kristallwasser zu einer plastischen Masse verarbeitet wird und dass die plastische Masse zu Granulat geformt und unterhalb der Schmelztemperatur abgekühlt wird.

Ein Grundgedanke der Erfindung besteht darin, die besonderen Eigenschaften von Calciumnitrat, welches selbst ein zur pflanzlichen Nährstoffversorgung geeignetes mineralisches Salz darstellt, bei der Herstellung einer plastischen Masse eines Düngemittels einzusetzen, um Granulat wirtschaftlich zu verarbeiten. Das Prinzip beruht darauf, dass Calciumnitrat bei verschiedenen Temperaturen unterschiedliche Kristallstrukturen bildet. Unterhalb von 132°C (bei Normalbedingungen) kristallisiert daraus das Tetrahydrat-Calciumnitrat in farblose, monokline, an der Luft zerfliesende Prismen. Dieses Tetrahydrat-Calciumnitrat wiederum schmilzt bei einer Temperatur oberhalb von 44°C (bei Normalbedingungen) im eigenen Kristallwasser.

Die Erfindung beruht nun darauf, das Tetrahydrat-Calcium-nitrat unterhalb dieser Temperatur von 44°C mit den anderen vorgesehenen mineralischen Düngemittelsalzen zu vermischen. Nachdem unterhalb dieser Schmelztemperatur das Calciumnitrat in einer im Wesentlichen kristallinen, pulverförmigen Form vorliegt, kann dieses einfach mit den anderen Salzen vermengt werden. Nach einer innigen Vermengung wird die Temperatur auf einen Wert oberhalb der Schmelztemperatur erhöht. Hierdurch wird gezielt Kristallwasser des Tetrahydrat-Calciumnitrates freigesetzt. Aufgrund der innigen Vermischung mit den anderen Salzen entsteht durch eine weitere mechanische Einwirkung aus den Salzen und dem freigesetzten Kristallwasser eine plastische, teigige Masse, welche für eine Granulatbildung geeignet ist. Diese plastische Masse wird unter gleichzeitiger Absenkung der Temperatur zu dem gewünschten Granulat geformt, wobei durch die Temperaturabsenkung unterhalb des Schmelzpunktes Kristallwasser nunmehr vom Calciumnitrat wieder gebunden werden kann. Somit erhärtet das aus der plastischen Masse geformte Granulat schlagartig oder zumindest sehr kurzfristig.

Eine thermische Trocknung, mit welcher der plastischen Masse Wasser entzogen werden müßte, ist hierbei nicht erforderlich.

Bei dem so hergestellten Granulat hat sich zudem in vorteilhafter Weise ergeben, dass das vom Tetrahydrat-Calciumnitrat freigesetzte Kristallwasser auch teilweise von den anderen mineralischen Salzen aufgenommen worden ist, wodurch sich interkristalline Verbindungen zwischen den einzelnen mineralischen Salzen ausbilden können. Durch das gleichmäßig in der Mischung austretende Kristallwasser wird dabei eine durchweg hervorragende Bindung und Verkittung der mineralischen Salze in dem Granulat durch das freigesetzte Kristallwasser bewirkt. Durch die teilweise Aufnahme des freigesetzten Kristallwassers auch durch andere mineralische Salze hat das Calciumnitrat auch seine Hygroskopizität verloren, welche bisher einer breiten Anwendung des Calciumnitrates als Düngemittelkomponente im Wege stand.

Das erfindungsgemäße Verfahren bietet den Vorteil, dass ein Düngemittelgranulat ohne Bindemittel und eine thermische Trocknung zum Wasserentzug herstellbar ist. Das eingesetzte Tetrahydrat-Calciumnitrat dient als eine Art Bindemittel, wobei das Calciumnitrat jedoch selbst von den Pflanzen als Nährstoff aufnehmbar ist. Der Zusatz anderer bzw. weiterer Bindemittel inklusive Wasser ist grundsätzlich nicht notwendig, so dass die thermische Trocknung und die damit verbundenen Kostennachteile sowie die negativen Auswirkungen auf die anderen Düngemittelbestandteile entfallen. Basierend auf den Rekristallisationsvorgängen des Calciumnitrates ergeben sich bei dem erfindungsgemäßen Verfahren nichtstaubende und besonders abriebfeste Granulate mit Größen zwischen 0,2 bis 4 mm, wobei diese Granulate unabhängig von deren Größe nahezu gleichbleibende gute Zerfallseigenschaften aufweisen. Das erfindungsgemäße Verfahren eignet sich somit insbesondere zur Verarbeitung von pulvrigen Düngemittelmischungen mit Eisen II und/oder Methylenharnstoff, welche bekanntlich sehr temperaturempfindlich sind. Des weiteren ist sogar eine Umarbeitung von fertigen Granulaten in kleinere oder größere Granulatgrößen ohne Veränderung des Nährstoffgehaltes möglich.

Der Anteil des Tetrahydrat-Calciumnitrats an der Mischung kann zwischen 0,5 % und 80 % betragen. Ein besonders guter Zusammenhalt innerhalb des Granulatkornes wird erfindungsgemäß aber dadurch erreicht, dass die Mischung aus 5 bis 40 % Tetrahydrat-Calciumnitrat gebildet wird. Der Anteil des Tetrahydrat-Calciumnitrats an der Mischung ist dabei im Wesentlichen von dem Bedarf an freizusetzendem Kristallwasser abhängig, welches teilweise von den anderen Düngemittelsalzen aufgenommen wird. Abhängig von der Eigenschaft der weiteren Düngemittelsalze, dieses Kristallwasser aufzunehmen, kann der geeignete Gehalt an Tetrahydrat-Calciumnitrat in einfacher Weise durch Versuche bestimmt werden.

Mit dem erfindungsgemäßem Verfahren können zusammen mit dem Tetrahydrat-Calciumnitrat beliebige weitere mineralische Salze sowie Spurenelemente und sogar organische Düngemittelkomponenten in gewissem Umfang mitverarbeitet werden.

Hinsichtlich der mineralischen Salze sind die Düngemittelkomponenten insbesondere aus der nachfolgend genannten Gruppe ausgewählt. Diese Gruppe besteht aus Methylenharnstoff, Ammoniumnitrat, Ammoniummolybdat, Ammoniumsulfat, Borsäure, Cobaltsulfat, Colemanit, Dicalciumphosphat, Eisensulfat monohydrat, Eisensulfat heptahydrat, Eisen EDTA, Harnstoff, Kaliumnitrat, Kaliumsulfat, Kaliumhydrogenphosphat, Kieserit, Kobaldsulfat, Kupfer EDTA, Kupfersulfat, Magnesiumoxid, Magnesiumphosphat, Mangansulfat, Mangan EDTA, Monoammoniumphosphat, Natriummolybdat, Steinmehl, Zinksulfat und Zink EDTA.

Damit können N-, P- oder K-Düngemittel hergestellt werden. Erfindungsgemäß ist es bevorzugt, dass die mineralischen Salze zur Bildung eines NPK-Düngemittels ausgewählt werden.

Eine besonders schnelle und schonende Verfahrensdurchführung wird erfindungsgemäß dadurch erreicht, dass die Mischung auf eine Temperatur zwischen 44° C und 90° C, insbesondere zwischen 60°C bis 80°C, aufgewärmt wird. In diesem Temperaturbereich wird einerseits eine schnelle Freisetzung des Kristallwassers erreicht, während andererseits die thermische Belastung der weiteren mineralischen Komponenten gering ist. In dem genannten Temperaturbereich konnte keine nennenswerte Veränderung beispielsweise von Methylenharnstoff oder eine Oxidation des Eisen II zu Eisen III festgestellt werden.

Grundsätzlich kann das Verfahren auch unter Zugabe einer gewissen geringen Wassermenge oder eines zusätzlichen Bindemittels durchgeführt werden. Im Vergleich zu bisherigen Verfahren kann aufgrund der erfindungsgemäßen Wirkung bei der Herstellung von Düngemittelgranulat die Zugabe dieser Komponenten jedoch drastisch reduziert werden. Nach der Erfindung ist es jedoch besonders vorteilhaft, dass die Verarbeitung zur plastischen Masse ohne Zugabe von Wasser oder einem Bindemittel durchgeführt wird.

Gemäß einer weiteren bevorzugten Ausführung der Erfindung ist es vorgesehen, dass zumindest das Bilden des Granulates in einem Mischer, insbesondere einem Intensivmischer durchgeführt wird. Derartige Intensivmischer sind aus dem Stand der Technik zur Herstellung von Mischungen und zum Agglomerieren von Granulat hinlänglich bekannt. Derartige Mischer werden beispielsweise von der Firma Eirich, Deutschland unter der Bezeichnung Intensiv-Mischer Typ R angeboten.

Alternativ zur Durchführung des Verfahrens in einem Mischer, ist es erfindungsgemäß, dass zum Mischen und zum Bilden der plastischen Masse ein Extruder, insbesondere ein Mehrwellen-Extruder eingesetzt wird. Mit einem Extruder kann das gesamte Verfahren in einer einzelnen Vorrichtung durchgeführt werden. Dabei werden die einzelnen Düngemittelkomponenten in den Extruder zugeführt, dort vermischt und unter der mechanischen Bearbeitung oder zusätzlich durch Heizelemente erwärmt. Mit Freisetzung des Kristallwassers wird durch Einwirkung vom Misch- und Knetextruder die plastische Masse gebildet und am Ausgang des Extruders durch ein Formwerkzeug entsprechend der gewünschten Granulatgröße unter gleichzeitiger Abkühlung ausextrudiert.

Grundsätzlich kann zwar die Granulatbildung auch getrennt von dem Extruder in einer separaten Vorrichtung, etwa durch Agglomerieren erfolgen. Es ist jedoch bevorzugt, dass vor einem Austrittsende des Extruders die plastische Masse ausgekühlt und bei Austritt aus dem Extruder zu dem Granulat abgelängt wird. Hierzu wird einem Formwerkzeug am Extruderaustritt ein Schneidwerkzeug zugeordnet, welches das austretende Extrudat ablängt.

Zur Verbesserung der Abriebfestigkeit des Granulates ist es nach einer weiteren Ausführung der Erfindung vorgesehen, dass das Granulat rondiert wird. Hierzu kann eine hinlänglich bekannte Rondiermaschine verwendet werden.

Zur bevorzugten Durchführung des Verfahrens wird ein zweiwelliger Misch- und Knetextruder in Kombination mit einem Rondiergerät eingesetzt, welche nachfolgend beschrieben werden.

Der Extruder umfasst zwei nebeneinanderliegende, ineinandergreifende Schneckenwellen, die aus Schneckenbüchsen und Knetelementen verschiedener Steigung und Länge zusammengesetzt sind.
Sie streifen sich gegenseitig und das Gehäuse mit engem Spiel ab, wodurch zwangsläufig eine Selbstreinigung erreicht wird ohne tote Ecken im Schneckengrund oder über dem Sattel. Das System ist weitgehend unabhängig von der Reibung zwischen Produkt und Gehäusewandung, so dass es auch bei starker Unterfüllung noch einwandfrei arbeitet.

Mit den Knetelementen, die in Anordnung, Zahl, Steigungsrichtung und Versatzwinkel variiert werden können, lassen sich die für das jeweilige Verfahren notwendigen Effekte gezielt herbeiführen. Die freien Querschnitte verändern sich während einer Umdrehung im Verhältnis 5:3. Dabei wirken in und auf das Produkt Scherkräfte aus den Geschwindigkeitsgefällen und formverändernde Normalkräfte aus der Volumenänderung. Letztere zwingen das Produkt in die benachbarte Zone. Durch entsprechenden Versatz der Knetelemente wird der überwiegende Materialanteil axial stromabwärts gefördert oder in einem "Pilgerschritt" zurückgefördert. So werden Längsmischwirkungen, Energieeinleitung und Verweilzeitspektrum gezielt beeinflusst.

Die Extruderschnecken werden aus einzelnen, auf Wellen aufgezogene ein- und zweigängigen Schneckenbüchsen und Knetblöcken zusammengesetzt, so dass eine optimale Anpassung möglich ist, ebenso ein rascher auch partieller Austausch einzelner Elemente. Die Schneckenwellen sind zwischen Getriebe und Verfahrensteil gekuppelt, so dass sie abgezogen werden können.

Der Verfahrensteil ist aus einzelnen Gehäuseschüssen zusammengesetzt, wodurch eine individuelle Anpassung an die erforderliche Verfahrenslänge möglich ist. Bei verschleißenden oder korrosiven Produkten erhalten die Gehäuse leicht auswechselbare Büchsen aus entsprechenden Werkstoffen. Die Gehäuse besitzten Längsbohrungen für Umlauftemperierung durch Wärmeträger. Jeder Gehäuseschuss sowie die Schnekkenwellen können getrennt temperiert werden.

Die Entfernung flüchtiger Mischungsbestandteile ist über entsprechende Gehäuseöffnungen mit oder ohne Vakuum möglich. Die Abdichtung gegenüber den stromauf- und abwärtsgelegenen, benachbarten Zonen erfolgt durch das Produkt. Zur Erfassung von Mischguttemperaturen und Druck können in Gehäusebohrungen Fühler vorgesehen werden. Die Mischgutkomponenten werden entsprechend den technologischen Erfordernissen entweder volumetrisch oder gravimetrisch als Vormischung oder Einzelkomponenten in einen gemeinsamen Einlauf dosiert oder in Teilströmen an mehreren Stellen zugegeben. Das Produkt wird unter Druck axial mit direkter Verformung über angeflanschte Granuliervorrichtungen ausgetragen.

Anschließend wird das Granulat einem Rondiergerät zugeführt. Das Rondiergerät ist für den Chargenbetrieb zur Ausrundung von feucht extrudierten Produkten oder vorgeformter Extrudaten mit Durchmesser von 300 bis 3000 µm ausgelegt.

Im Rondiergerät werden vorgeformte Produkte in eine gleichmäßige, spiralbahnförmige Umwälzbewegung versetzt. Diese Bewegung wird durch die Überlagerung von Luftstrom-, Zentrifugal- bzw. Gravitationskräften erreicht.

In der Rollphase der Produkte nehmen die Reibungskräfte der Rotorscheibe und der Behälterwand Einfluss auf die Form des Produktes. Die Produkte werden durch die Einfüllstutzen auf die drehende Rotorscheibe aufgegeben. Die aus der Drehbewegung resultierende Zentrifugalkraft fördert das Produkt gegen die Behälterwand.

Die Rotation der Rotorscheibe, das nachdrängende Produkt und die vom seitlichen Luftspalt eintretende Luft erzeugen eine kreisende Produktbewegung an der Behälterwand. Nach einer Verweilzeit, die von der Drehzahl der Rotorscheibe und der Produktbeschaffenheit bestimmt wird, wird das Gerät über die Entleerklappe entleert. Zur Verlängerung der Verweilzeit können mehrere Rondiergeräte kaskadenartig übereinander installiert werden.

Bei einer versuchweisen Durchführung des Verfahrens auf dem oben beschriebenen Extruder wurden folgende Ergebnisse ermittelt.

Mit steigender Gehäusetemperatur erhöht sich die Intensität der Plastifizierung, bis es bei zu hohen Temperaturen von weit über 100°C das Produkt zersetzt. Der Druck und die spezifische Energie sinken durch die von außen zugeführte Konvektionswärme, welche eine Viskositätserniedrigung der plastischen Masse bewirkt. Die Dichte bleibt nahezu konstant, wogegen die Temperatur bis zur Zersetzung ansteigt. Bei deutlich erhöhter Drehzahl auf 200 1/min lässt sich auch bei niedrigen Gehäusetemperaturen ein Produkt extrudieren, da bei gleicher Materialtemperatur und entsprechend kurzer Verweilzeit das Material sich nicht mehr zersetzt.

In den Versuchen mit verschiedenen NPK-Mischungen wurde der überaus große Einfluss des freigesetzten Kristallwassers erkennbar, der über den Anteil des Tetrahydrat-Calciumnitrats als Prozessparameter leicht und schnell einstellbar ist.

In den Versuchsreihen konnten Granulate der unterschiedlichsten Formulierung und Zusammensetzung hergestellt werden mit sehr guten Zerfallseigenschaften und einem Staubanteil von unter <0,2%. Es hat sich weiter ergeben, dass sich durch die mechanische und thermische Behandlung keine Veränderung des Methylenharnstoffes und keine Oxidation des Eisen II zu Eisen III aufgetreten ist. Weiter wurde festgestellt, dass die Produktqualität gleichbleibend ist und die Granulate eine hohe Homogenität aufweisen. Der Einsatz von Calciumnitrat ermöglicht es, die vom Anwender geforderten Qualitätsparameter wie hohe Festigkeit und ein nach der Ausbringung schneller Zerfall in einem Produkt zu vereinigen.

Bei diesen extrudierten Düngemitteln wurde neben der großen Festigkeit, der guten Transport- und Lagerfähigkeit auch ein rascher Zerfall nachgewiesen.

Aufgrund von Recherchen in anderen Produktionsbereichen wurde festgestellt, dass ein Vorteil gegenüber anderen Verfahren darin besteht, dass der Extruder flexibler, schneller und mit einem geringeren Restvolumen im Prozess betrieben werden kann. Durch den Gutkornanteil, der bei 90 bis 98% liegt, fallen nur geringe Mengen an, die in den Prozess zurückgeführt werden können.

Gleichzeitig wurden durch Formulierungsversuche mit Calciumnitrat klare Ergebnisse mit diesem Rohstoff erzielt. In bisherigen Verfahren wurden aufgrund der chemischen und physikalischen Eigenschaften Düngemittel extrudiert, deren Rohstoffe erhebliche Mengen Binde- oder Plastifizierungsmittel zugesetzt wurden. Da es sich hierbei nicht um Nährstoffträger handelt, ist das Spektrum der Formulierung eingeschränkt. Bei erfindungsgemäß hergestellten Düngemitteln ist dies nicht notwendig. Es können sogar Methylenharnstoffe eingesetzt werden, welche ansonsten aufgrund ihrer chemischen Eigenschaften unter bestimmten Bedingungen zur Weiterkondensation oder Zersetzung neigen.

## Patentansprüche

1. Verfahren zur Herstellung eines Düngemittels mit mineralischen Salzen, bei dem die mineralischen Salze vermischt und zu Granulat verarbeitet werden,
**dadurch gekennzeichnet,**
- **dass** den mineralischen Salzen kristallines Tetrahydrat-Calciumnitrat unterhalb seiner Schmelztemperatur beigemengt und zu einer Mischung vermengt wird,
- **dass** die Mischung aus den mineralischen Salzen und dem Tetrahydrat-Calcuiumnitrat auf eine Temperatur oberhalb der Schmelztemperatur des Tetrahydrat-Calciumnitrates erwärmt und dabei Kristallwasser freigesetzt wird,
- **dass** bei dieser Temperatur die Mischung mit dem freigesetzten Kristallwasser zu einer plastischen Masse verarbeitet wird und
- **dass** die plastische Masse zu Granulat geformt und unterhalb der Schmelztemperatur abgekühlt wird.

2. Verfahren nach Anspruch 1,
**dadurch gekennzeichnet,**
**dass** die Mischung aus 5 bis 40% Tetrahydrat-Calciumnitrat gebildet wird.

3. Verfahren nach Anspruch 1 oder 2,
**dadurch gekennzeichnet,**
**dass** die mineralischen Salze zur Bildung eines NPK-Düngemittels ausgewählt werden.

4. Verfahren nach einem der Ansprüche 1 bis 3,
**dadurch gekennzeichnet,**
**dass** die Mischung auf eine Temperatur zwischen 44°C und 90°C, insbesondere zwischen 60°C bis 80°C, aufgewärmt wird.

5. Verfahren nach einem der Ansprüche 1 bis 4,
**dadurch gekennzeichnet,**
**dass** die Verarbeitung zur plastischen Masse ohne Zugabe von Wasser oder einem Bindemittel durchgeführt wird.

6. Verfahren nach einem der Ansprüche 1 bis 5,
**dadurch gekennzeichnet,**
**dass** zumindest das Bilden des Granulates in einem Mischer, insbesondere einem Intensivmischer, durchgeführt wird.

7. Verfahren nach einem der Ansprüche 1 bis 5,
**dadurch gekennzeichnet,**
**dass** zum Mischen und zum Bilden der plastischen Masse ein Extruder, insbesondere ein Mehrwellen-Extruder eingesetzt wird.

8. Verfahren nach Anspruch 7,
**dadurch gekennzeichnet,**
**dass** vor einem Austrittsende des Extruders die plastische Masse abgekühlt und bei Austritt aus dem Extruder zu dem Granulat abgelängt wird.

9. Verfahren nach einem der Ansprüche 1 bis 8,
**dadurch gekennzeichnet,**
**dass** Granulat rondiert wird.
